# EUROPEAN PATENT SPECIFICATION

(11) **EP 1 931 905 B1**
(45) Date of publication and mention of the grant of the patent: **08.08.2012**
(21) Application number: 05802331.8
(22) Date of filing: 16.09.2005
(51) Int. Cl.: F16L 53/00

(54) **MULTI-LAYER PIPING FOR CONVEYING AND HEATING A FLUID**
MEHRLAGIGE ROHRLEITUNG ZUM TRANSPORTIEREN UND ERHITZEN EINES FLUIDS
SYSTEME DE TUYAU MULTICOUCHE POUR L'ACHEMINEMENT ET LE CHAUFFAGE DE FLUIDE

(43) Date of publication of application: 18.06.2008
(73) Proprietor: DYTECH - Dynamic Fluid Technologies S.p.A., 10123 Torino (IT)
(72) Inventor: COLOSIMO, Franco, I-10056 San Mauro Torinese (IT); ZASA, Mario, I-10042 Nichelino (IT); CAVANNA, Simone, I-10060 Cercenasco (IT)
(74) Representative: Fiussello, Francesco
(86) International application number: PCT/IT2005/000530
(87) International publication number: WO 2007/032033

(56) References cited:
- EP-A- 0 312 204
- DE-U1-202005 004 602
- US-A- 4 214 147
- US-A- 5 381 511
- US-A1- 2005 063 689

## Description

### TECHNICAL FIELD

The present invention relates to a multi-layer piping for conveying and heating a fluid, in particular an aqueous urea solution.

### BACKGROUND FIELD

To comply with the new anti-pollution standards, which impose more restrictive exhaust gas emission limits with respect to the existent, it is known the use of the so-called purification system by selective catalytic reduction, also known under the acronymic SCR ("Selective Catalytic Reduction") of the vehicle exhaust gases. Such system is adopted, in particular, for reducing the emission into the atmosphere of nitrogen oxides.

Preferably, the SCR system is used in light-duty and heavy-duty vehicles.

The SCR system consists of injecting by compressed air at the catalyse inlet an aqueous solution of urea or equivalent product capable of reacting with the nitrogen oxides. Generally, it is preferred an aqueous solution of 32.5% of urea, for example the solution commonly marketed by Basf under the name AdBlue. The catalyse is arranged at the exhaust gas muffler and, inside it, the introduced urea reacts with the nitrogen oxides, also commonly called NOₓ, eliminating them from the atmospheric emissions.

The aqueous urea solution is generally contained in a tank from where it is taken to be injected into the catalyser, after being mixed to compressed air, according to times and modes defined by an electronic control unit which accounts for various parameters such as for example temperature, humidity, engine operation and number of revolutions.

A known problem of the SCR system is that during the parking of vehicles at temperatures lower than -12°C the urea solution freezes. For this reason when the engine is ignited after parking, the pipings containing the urea solution are immediately heated up by passage of electrical current.

For example it is felt the need to reach a temperature of at least +5°C for the urea solution at least ten minutes after the engine is ignited, with the SCR system initially placed at an ambient temperature of -35°C.

Furthermore, the pipings which convey the aqueous urea solution must allow the passage of fluid in the working temperature range, that is from -40°C to 80°C, must be flexible and must ensure that, in -40°C conditions, the aqueous urea solution does not freeze in any part in all flow rate conditions, that is from 0 to 5.5 1/h.

For heating up the aqueous solution there are therefore generally used electrically heated pipings and pipe fittings, for example shown in document EP 0312 204.

For example, it is known the use of heated pipings comprising TEFLON^{®} fluid conveying pipes, with an electrical resistance externally wound on a polyethylene heat-shrink sheath which also has the function of electrical insulation and is further covered by a corrugated polyamide tube.

Such solution however does not allow to obtain a sufficiently rapid defrosting of the aqueous solution to respond to the aforementioned requirements due to the fact that the TEFLON^{®} does not allow sufficient conduction of heat to warm up the inside of the pipe. The TEFLON^{®} pipes also present problems in use in mating of couplings and are also very costly.

### DISCLOSURE OF INVENTION

It was therefore sought a piping for a SCR system which allows to avoid the aforementioned drawbacks and consequently allows to rapidly defrost an aqueous urea solution.

A piping capable of rapidly and efficiently heating the fluid to be conveyed may also be advantageously used in a number of other applications, in particular both for domestic applications and on vehicles.

According to the present invention a piping 1 is made according to claim 1.

Preferably, the piping 1 comprises:
- a fluid conveying pipe 2 comprising a thermoplastic elastomer;
- a heating element 3;
- a sealing element 4;
- an insulating layer 5;
- an anti-abrasive layer 6.

Preferably, the piping 1 of the present invention is used for conveying an aqueous urea solution.

### BRIEF DESCRIPTION OF THE DRAWINGS

For a better understanding of the present invention, it is further described with reference to the accompanying figures, which show:

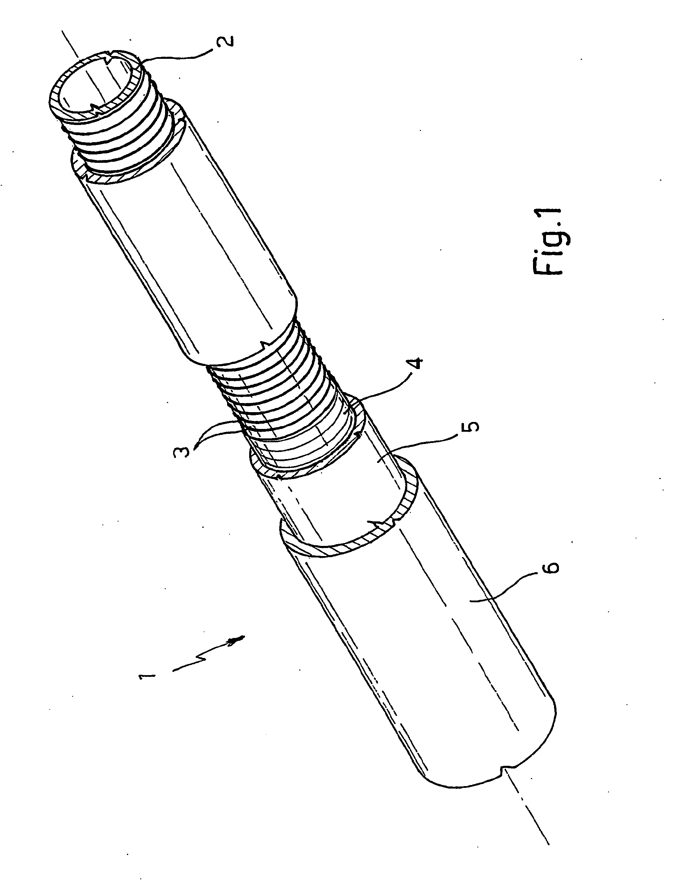

- figure 1 is a sectional and partial view of a piping made according to the present invention; and

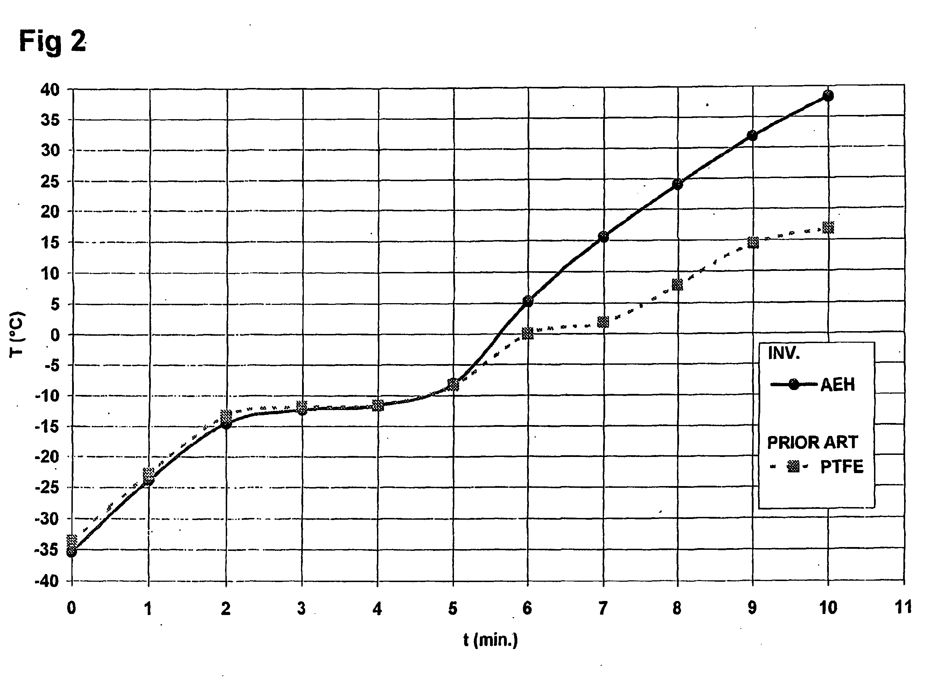

- figure 2 a graph showing the temperature value pattern in time of a 32% aqueous urea solution contained in a piping made according to the invention compared with a piping made according to the known art.

### BEST MODE FOR CARRYING OUT THE INVENTION

In particular, the conveying pipe comprises a thermoplastic elastomer also known under the acronym TPE. For thermoplastic elastomer it is meant a polymeric material which behaves like an elastomer, but when heated can be worked like a thermoplastic.

Preferably, it is used a thermoplastic elastomer with polyolefinic matrix based in which is intimately dispersed a dynamically vulcanised elastomeric phase.

More preferably, the polyolefinic matrix is a polypropylene and the elastomeric phase is EPDM.

Even more preferably, the thermoplastic elastomer is a Forprene^{®}.

Preferably, the conveying pipe 2 consists of a thermoplastic elastomer made thermally conductive by integration of appropriate fillers in the compound.

Preferably, such fillers are metallic fillers.

Advantageously, the thermal conductivity of the thermoplastic elastomer is comprised from 1.2 W/mK to 40 W/mK according to the ASTM E1461 test standards. More advantageously, thermal conductivity is approximately 20 W/mk.

Preferably, the pipe presents an internal diameter larger than 5 mm.

Preferably, the thickness of the conveying pipe 2 is comprised from 2 to 4 mm.

The heating element is preferably made of an electrical resistor 3 wound around the conveying pipe.

Even more preferably, it is used a heating wire, for example of the type marketed under the code NiCr8020 by Shanghai Anhing Alloy Material Co. Ltd. The electrical resistor can be bipolar or monopolar. Preferably, bipolar.

The geometries and the dimensions of the electrical resistive elements depend on the features required by specific use and moreover depend on the dimensions of the components in the whole piping.

Preferably, the heating element 3 is electrically insulated, preferably by use of TEFLON^{®}. Alternatively, it is possible to use for example silicon or polyamide.

Preferably, the maintenance element 4 consists of a heat-shrink plastic sheath 4.

The heat-shrink sheath 4 is preferably made of polyethylene, because this material has excellent elastic memory features. The polyethylene used is generally heated to a temperature higher than 100°C and then cooled down, and increases its dimensions preserving elasticity nevertheless. The polyethylene sheets are then heated to over 100°C again and the second heating causes in the radiated polyethylene the return to the original dimensions, adhering perfectly to the layers underneath.

The heat-shrinkability depends on the degree of deformation of the material and may vary from 50 to 300% of the original dimensions.

The insulating layer 5 is preferably made of polyurethane. More preferably, it is made of open or closed cell expanded polyurethane. More preferably, it is made of closed cell expanded polyurethane.

Preferably, the insulating layer 5 presents a thickness higher than 5 mm and an internal diameter depending on the diameter of the conveying pipe 2.

The anti-abrasive layer 6 is preferably made of a corrugated tube 6. Preferably, the corrugated tube 6 is made of polyamide 12. Alternatively, the anti-abrasive layer 6 is a spiral sheath or spiral tape of appropriate dimensions to maintain the designed curve radius, preferably made of polyamide 6 or 12. Even more preferably, the spiral sheath is made of polyamide 12 because it has a better chemical resistance.

A piping manufactured according to the structure described above is capable of reaching the objective of defrosting the aqueous urea solution in a shorter time with respect to the known pipings.

It is finally apparent that numerous changes can be implemented to the piping herein described and illustrated, in particular, to the percentage ratio of the chemical components forming the various layers and to the relative thickness of the layers, as well as to the number of layers themselves, for example, the heat-shrink sheath may not be present, without departing from the protective scope of the present invention nevertheless.

It is moreover apparent that although specific reference is made to the conveying of an aqueous urea solution, a piping made according to the present invention may be advantageously used in all systems in which the fluid conveyed by the piping needs to be heated.

In the above description, there are apparent the advantages of a piping made according to the present invention, in particular by means of such piping it is possible to heat a liquid in a shorter time with respect to the known pipings and at the same time to have a sufficiently flexible piping and at a limited cost.

The invention will now be described through examples which are however non-limitative.

### Example 1

Table 1 shows an example of a piping made according to the present invention, while table 2 shows an example of a comparison piping.

**Table 1**

| Inventive example | |
|---|---|
| Conveying pipe 2 | Forprene^{®} tube 9x5mm, length 1500mm |
| Heating element 3 | Bipolar NiCr8020 wire, 6.3 Ω, TEFLON^{®} insulated |
| Sealing element 4 | Heat-shrink polyethylene sheath |
| Insulating layer 5 | Closed cell extruded expanded polyurethane tube |
| Anti-abrasive layer 6 | Corrugated polyamide tube 12 |

**Table 2**

| Comparative example | |
|---|---|
| Conveying pipe | TEFLON^{®} tube 8x6mm, length 1500mm |
| Heating element | Bipolar NiCr3020 wire, 6.3 Ω, TEFLON^{®} insulated |
| Sealing element | Heat-shrink polyethylene sheath |
| Anti-abrasive layer | Corrugated tube |

Graph 1 shows the temperature value pattern in time of a 32% aqueous urea solution contained in the piping according to the present invention whose composition is described above in table 1 and of the piping used as comparison whose composition is shown in table 2.

Such temperature is measured by introducing in the pipings, inside which is introduced the aqueous urea solution, into a sealed climatic cell where a temperature of -35°C is stabilised. In such a way, the solution contained inside is frozen taking it also to a temperature of -35°C.

After stabilising the temperature, the electrical connections of the electrical resistor wound on the conveying pipe are connected to an electrical power supply under a voltage of 24V, and therefore a current of 3.8 A is circulated.

A series of thermocouples placed inside the piping allow to determine the temperature of the aqueous solution.

It is apparent that the use of a piping made according to the present invention allows to raise the temperature, of the aqueous urea solution faster and more efficiently that in the case of the known art.

## Claims

1. A piping (1) for conveying a fluid comprising a fluid conveying pipe (2) comprising a thermoplastic elastomer and a heating element (3), **characterised in that** said thermoplastic elastomer comprises a polyolefinic matrix in which is intimately dispersed an elastomeric phase.

2. A piping (1) according to claim 1, **characterised in that** said polyolefinic matrix comprises polypropylene.

3. A piping (1) according to claim 2, **characterised in that** said elastomeric phase is EPDM.

4. A piping (1) according to any of the claims from 2 to 3, **characterised in that** said thermoplastic elastomer is thermally conductive.

5. A piping (1) according to claim 4, **characterised in that** said thermoplastic elastomer has a thermal conductivity higher than 1.2 W/mK.

6. A piping (1) according to claims 4 or 5, **characterised in that** said thermoplastic elastomer comprises electrical charges added before forming to be made thermally conductive.

7. A device according to claim 6, **characterised in that** said electrical charges are metallic fillers.

8. A piping (1) according to any one of the preceding claims, **characterised in that** said heating element consists of a wire.

9. A piping (1) according to claim 8, **characterised in that** said wire is wound externally on said conveying pipe.

10. A piping (1) according to any one of the preceding claims, **characterised in that** it comprises an insulating layer (5).

11. A piping (1) according to claim 10, **characterised in that** said insulating layer (5) is a polyurethane tube.

12. A piping (1) according to any one of the preceding claims, **characterised in that** it comprises an anti-abrasive layer (6).

13. A piping (1) according to claim 12, **characterised in that** said anti-abrasive layer (6) is a corrugated tube.

14. A piping (1) according to claim 13, **characterised in that** said anti-abrasive layer (6) is of polyamide 12.

15. A piping (1) according to any one of the preceding claims, **characterised in that** it comprises a sealing element (4) of the heating element (3) on said conveying pipe (2).

16. Use of a piping according to any one of the preceding claims, for conveying a solution capable of reacting with nitrogenous compounds.

17. Use according to claim 16, **characterised in that** said solution is an aqueous urea solution.

18. Use of a piping according to any of the claims from 1 to 15 in a selective catalytic reduction system (SCR).

## Patentansprüche

1. Rohrleitungssystem (1) zum Leiten eines Fluids, welches ein ein thermoplastisches Elastomer umfassendes, ein Fluid leitendes Rohr (2) und ein Heizelement (3) umfasst, **dadurch gekennzeichnet, dass** das thermoplastische Elastomer eine polyolefinische Matrix, in welcher eine Elastomer-Phase innig dispergiert ist, umfasst.

2. Rohrleitungssystem (1) nach Anspruch 1, **dadurch gekennzeichnet, dass** die polyolefinische Matrix Polypropylen umfasst.

3. Rohrleitungssystem (1) nach Anspruch 2, **dadurch gekennzeichnet, dass** die Elastomer-Phase EPDM ist.

4. Rohrleitungssystem (1) nach einem der Ansprüche 2 bis 3, **dadurch gekennzeichnet, dass** das thermoplastische Elastomer wärmeleitend ist.

5. Rohrleitungssystem (1) nach Anspruch 4, **dadurch gekennzeichnet, dass** das thermoplastische Elastomer eine Wärmeleitfähigkeit über 1,2 W/m_{·}K aufweist.

6. Rohrleitungssystem (1) nach Anspruch 4 oder 5, **dadurch gekennzeichnet, dass** das thermoplastische Elastomer elektrische Einsatzmaterialien umfasst, die vor dem Formen hinzugefügt worden sind, um es wärmeleitend zu machen.

7. Vorrichtung nach Anspruch 6, **dadurch gekennzeichnet, dass** die elektrischen Einsatzmaterialien metallische Füllstoffe sind.

8. Rohrleitungssystem (1) nach einem der vorangegangenen Ansprüche, **dadurch gekennzeichnet, dass** das Heizelement aus einem Draht besteht.

9. Rohrleitungssystem (1) nach Anspruch 8, **dadurch gekennzeichnet, dass** der Draht von außen auf das Leitungsrohr gewunden ist.

10. Rohrleitungssystem (1) nach einem der vorangegangenen Ansprüche, **dadurch gekennzeichnet, dass** es eine isolierende Schicht (5) umfasst.

11. Rohrleitungssystem (1) nach Anspruch 10, **dadurch gekennzeichnet, dass** die isolierende Schicht (5) ein Polyurethanrohr ist.

12. Rohrleitungssystem (1) nach einem der vorangegangenen Ansprüche, **dadurch gekennzeichnet, dass** es eine Verschleißschutzschicht (6) umfasst.

13. Rohrleitungssystem (1) nach Anspruch 12, **dadurch gekennzeichnet, dass** die Verschleißschutzschicht (6) ein Wellrohr ist.

14. Rohrleitungssystem (1) nach Anspruch 13, **dadurch gekennzeichnet, dass** die Verschleißschutzschicht (6) aus Polyamid 12 besteht.

15. Rohrleitungssystem (1) nach einem der vorangegangenen Ansprüche, **dadurch gekennzeichnet, dass** es ein Versiegelungselement (4) des Heizelements (3) auf dem Leitungsrohr (2) umfasst.

16. Verwendung eines Rohrleitungssystems nach einem der vorangegangenen Ansprüche zum Leiten einer Lösung, die in der Lage ist, mit stickstoffhaltigen Verbindungen zu reagieren.

17. Verwendung nach Anspruch 16, **dadurch gekennzeichnet, dass** die Lösung eine wässrige Harnstofflösung ist.

18. Verwendung eines Rohrleitungssystems nach einem der Ansprüche 1 bis 15 in einem selektiven katalytischen Reduktionssystem (SCR).

## Revendications

1. Tuyau (1) destiné à acheminer un fluide comprenant un tuyau d'acheminement de fluide (2) comprenant un élastomère thermoplastique et un élément chauffant (3), **caractérisé en ce que** ledit élastomère thermoplastique comprend une matrice polyoléfinique dans laquelle est dispersée étroitement une phase élastomère.

2. Tuyau (1) selon la revendication 1, **caractérisé en ce que** ladite matrice polyoléfinique comprend du polypropylène.

3. Tuyau (1) selon la revendication 2, **caractérisé en ce que** ladite phase élastomère est un EPDM.

4. Tuyau (1) selon l'une quelconque des revendications 2 à 3, **caractérisé en ce que** ledit élastomère thermoplastique est thermoconducteur.

5. Tuyau (1) selon la revendication 4, **caractérisé en ce que** ledit élastomère thermoplastique présente une conductivité thermique supérieure à 1,2 W/mK.

6. Tuyau (1) selon les revendications 4 ou 5, **caractérisé en ce que** ledit élastomère thermoplastique comprend des charges électriques ajoutées avant le formage pour le rendre thermoconducteur.

7. Dispositif selon la revendication 6, **caractérisé en ce que** lesdites charges électriques sont des agents de charge métalliques.

8. Tuyau (1) selon l'une quelconque des revendications précédentes, **caractérisé en ce que** ledit élément chauffant est constitué d'un fil.

9. Tuyau (1) selon la revendication 8, **caractérisé en ce que** ledit fil est enroulé de manière externe sur ledit tuyau d'acheminement.

10. Tuyau (1) selon l'une quelconque des revendications précédentes, **caractérisé en ce qu'**il comprend une couche isolante (5).

11. Tuyau (1) selon la revendication 10, **caractérisé en ce que** ladite couche isolante (5) est un tube de polyuréthane.

12. Tuyau (1) selon l'une quelconque des revendications précédentes, **caractérisé en ce qu'**il comprend une couche anti-abrasive (6).

13. Tuyau (1) selon la revendication 12, **caractérisé en ce que** ladite couche anti-abrasive (6) est un tube cannelé.

14. Tuyau (1) selon la revendication 13, **caractérisé en ce que** ladite couche anti-abrasive (6) est du polyamide 12.

15. Tuyau (1) selon l'une quelconque des revendications précédentes, **caractérisé en ce qu'**il comprend un élément d'étanchéité (4) de l'élément chauffant (3) sur ledit tuyau d'acheminement (2).

16. Utilisation d'un tuyau selon l'une quelconque des revendications précédentes, en vue d'acheminer une solution en mesure de réagir avec des composés azotés.

17. Utilisation selon la revendication 16, **caractérisée en ce que** ladite solution est une solution d'urée aqueuse.

18. Utilisation d'un tuyau selon l'une quelconque des revendications 1 à 15 dans un système de réduction catalytique sélective (SCR).
